# EUROPEAN PATENT SPECIFICATION

(11) **EP 1 512 321 B1**
(45) Date of publication and mention of the grant of the patent: **08.10.2008**
(21) Application number: 04104155.9
(22) Date of filing: 31.08.2004
(51) Int. Cl.: A01G 23/00, B65B 13/00, B65B 27/00

(54) **Method and device for processing wood**
Verfahren und Vorrichtung zur Bearbeitung von Holz
Procédé et dispositif pour le traitement du bois

(30) Priority: 04.09.2003 FI 20031256
(43) Date of publication of application: 09.03.2005
(73) Proprietor: Romo, Pasi, 51460 Luusniemi (FI)
(72) Inventor: Romo, Pasi, 51460 Luusniemi (FI)
(74) Representative: Kuosmanen, Timo

(56) References cited:
- EP-A- 1 121 851
- WO-A-02/01939
- DE-A- 19 909 332
- SE-B- 446 582
- US-A- 4 665 961

## Description

### BACKGROUND OF THE INVENTION

The invention relates to a method of processing wood in a processing device, the method comprising: feeding wood with a feed conveyor through a feed opening in the processing device into a feed chamber; cutting the wood by means of at least one cutting device provided between the feed conveyor and the feed chamber after feeding a wood batch of a predetermined size into the feed chamber; transferring the wood in the feed chamber away from the feed opening after the cutting; and compressing the cut wood to reduce its volume and to create a wood bundle.

The invention further relates to a device for processing wood, the device comprising: a feed chamber provided with a feed opening; at least one feed conveyor configured to feed the wood to be processed through the feed opening into the feed chamber; at least one cutting device arranged between the feed conveyor and the feed chamber, the cutting device being configured to cut the wood after the wood is fed into the feed chamber; an intermediate chamber disposed in the immediate vicinity of the feed chamber; transfer means for transferring the cut wood from the feed chamber into the intermediate chamber; means for transferring the wood further from the intermediate chamber into a compression chamber; and compression means for reducing the volume of the wood in the compression chamber and for creating a wood bundle.

Increasingly more attention is being paid to the use of logging residue, i.e. branches, twigs, top refuse and other wood suitable for energy wood as the price of energy continues to rise. For harvesting energy wood, vehicles have been developed that are provided with processing devices for compressing the wood and for strapping it into an easily workable elongated bundle. The bundles are allowed to dry, after which they are collected from the forest and transported to an energy plant for chipping and combustion.

WO 02/01939 discloses a harvesting device comprising a feeding table onto which the wood is placed and then fed through a feed opening into a feed chamber of the harvesting device. In the feed chamber, the wood is cut into the desired length. The cut wood is then transferred by means of a rotating feeding blade in the feed chamber into a compression chamber where the wood is compressed. Finally, the compressed wood bundle is strapped to keep the elongated wood bundle well together. The arrangement of a rotating feeding blade may be difficult in some constructions.

### BRIEF DESCRIPTION OF THE INVENTION

The object of the present invention is to provide a new and improved method and device for processing wood.

The method of the invention is characterized by moving a bottom of the feed chamber vertically and discharging the wood from the feed chamber by means of the bottom.

The device of the invention is characterized in that the feed chamber comprises a bottom, that at least one actuator is arranged to move the bottom of the feed chamber vertically, and that the wood is arranged to be moved from the feed chamber into the intermediate chamber by moving said bottom.

The essential idea of the invention is that the bottom of the feed chamber is arranged vertically movable. This being so, the wood can be moved from the feed chamber into the intermediate chamber by moving the bottom of the feed chamber after the cutting. The intermediate chamber comprises means for receiving the wood in a manner allowing the bottom of the feed chamber to be restored from the transfer position to the original position, after which a new batch of wood can again be fed into the feed chamber.

An advantage of the invention is that the mechanism required for moving the bottom of the feed chamber is relatively easy to implement. In addition, the structure can be light and requires only little space. A further advantage is that controlling the linear movement of the bottom of the feed chamber is simple.

The essential idea of an embodiment of the invention is that the wood is temporarily stored in the intermediate chamber above the feed chamber. The intermediate chamber comprises at least one conveyor for gri p-ping and temporarily storing the wood, and for transferring the wood from the intermediate chamber to the compression chamber.

The essential idea of an embodiment of the invention is that the conveyor in the intermediate chamber comprises at least a first conveyor belt and a second conveyor belt, the conveyor belts being compressible towards each other. This allows the wood to be conveyed between the conveyor belts into the compression chamber. The conveyor belts provide a large friction surface, enabling reliable transfer of the wood. Furthermore, the compressive force of the conveyor belts can be easily adjusted according to the need.

The essential idea of an embodiment of the invention is that the compression chamber comprises at least one flexible tightening member that can be tightened around the wood bundle in order to reduce the volume of the wood bundle. The flexible tightening member can be a chain, a strap, a wire, a metal band or the like. The advantage of a flexible tightening member is that it is light and it can be swiftly tightened.

The essential idea of an embodiment of the invention is that the compression chamber comprises at least one closing jaw that can be arranged between the compression chamber and the intermediate chamber. The closing jaw together with the other structure delimiting the compression chamber are arranged to constitute a substantially integrated mechanical structure around the wood bundle in the compression chamber. Furthermore, the closing jaw and the parts delimiting the compression chamber are provided with at least one guide surface along which the binding device can be driven around the wood bundle in the compression chamber for adjusting the binding member.

The essential idea of an embodiment of the invention is that in connection with the bottom of the feed chamber is provided at least one closing member arranged to close the feed opening when the wood is transferred away from the feed chamber by means of the bottom. In other words, the closing member prevents the entry of the wood into the feed chamber when the feed chamber is not ready to receive it. Furthermore, the feed conveyor does not necessarily have to be stopped during the transfer of the bottom.

The essential idea of an embodiment of the invention is that at least one netlike binding member is arranged around the compact wood bundle. The net remains well in position and is swiftly installable around the wood bundle.

The essential idea of an embodiment of the invention is that the conveyor in the intermediate chamber is installable in such a manner that it constitutes a substantially even surface that delimits the upper part of the feed chamber. This brings about the advantage of easier feed of wood into a feed chamber having even inner surfaces.

### BRIEF DESCRIPTION OF THE FIGURES

The invention will be described in more detail in the accompanying drawings, wherein
Figure 1 is a schematic side view of a wood-processing device according to the invention, arranged on a movable carrier,
Figure 2 schematically shows a wood-processing device according to the invention seen from the rear part of the vehicle,
Figures 3 and 4 schematically show the structure and operational principle of a processing device according to the invention,
Figure 5 schematically shows an embodiment of a compression chamber,
Figures 6 and 7 schematically show another embodiment of a compression chamber,
Figure 8 schematically shows a roller conveyor applicable to an i n-termediate chamber of a processing device,
Figure 9 schematically shows a conveyor based on opposite compressor parts, applicable to an intermediate chamber of a processing device,
Figure 10 schematically shows a conveyor in an intermediate chamber, the lower surface of the conveyor serving as a surface delimiting the feed chamber,
Figure 11 schematically shows a wood bundle, around which a netlike binding member is arranged,
Figure 12 schematically shows a bottom of a feed chamber, provided with means for closing the feed opening, and
Figure 13 schematically shows still another embodiment of a compression chamber.

For the sake of clarity, the figures show the invention in a simplified manner. In the figures, the same reference numerals are used to denote similar parts.

### DETAILED DESCRIPTION OF THE INVENTION

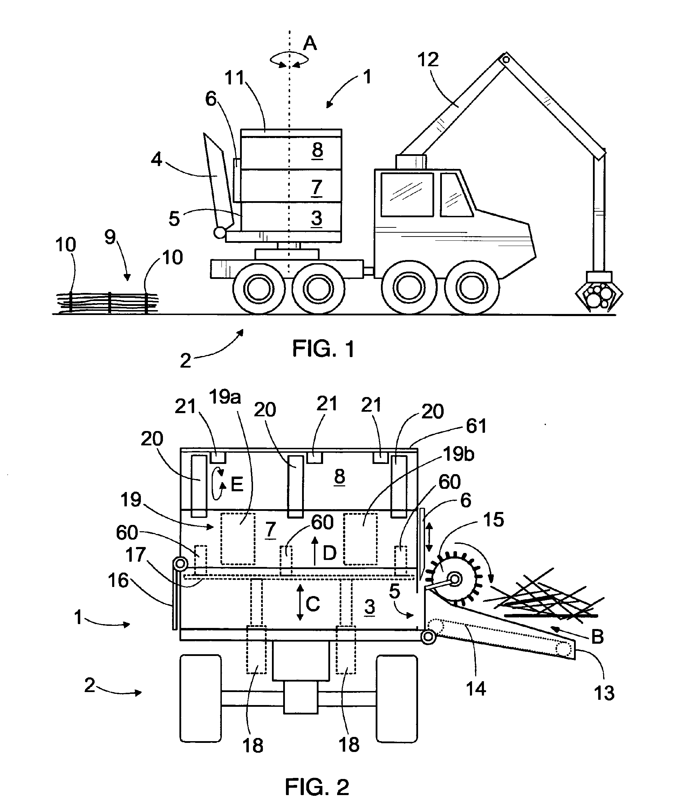

In Figure 1, a wood-processing device 1 is arranged on a movable carrier 2. The movable carrier 2 may be for instance a forest tractor or a corresponding cross-country vehicle with which the processing device 1 can be transported to the forest. The processing device 1 may be arranged on the carrier 2 in a manner allowing it to be turned in the way shown by arrow A relative to the carrier 2 into the desired position, for instance transversely to the vehicle as shown in Figure 2. This allows the processing device 1 to be aligned with the wood in the forest, which speeds up the feed of wood into the processing device 1. The processing device 1 comprises a feed chamber 3 into which wood material, such as twigs, small-dimensioned wood, logging residue or any wood suitable for energy production, for example, can be fed by means of a feed conveyor 4. The feed conveyor 4 can be arranged in a manner allowing it to be lifted into an upper position during transports. The feed chamber 3 comprises a feed opening 5, through which the wood is fed into the processing device 1. Furthermore, in connection with the feed opening 5 is provided a cutting device 6 with which the wood can be cut after feeding a suitable batch into the feed chamber 3. An intermediate chamber 7 can be provided above the feed chamber 3, and, further, above the intermediate chamber 7 may be arranged a compression chamber 8. If need be, cut wood can be temporarily stored in the intermediate chamber 7 should a previous wood bundle still be under processing in the compression chamber 8. In addition, the intermediate chamber 7 enables the collection of a plurality of cut wood batches into a larger batch before they are transferred into the compression chamber 8. In the compression chamber 8, wood can be compressed in order to reduce its volume. In addition, the compression forms the wood into a bundle 9, around which one or more binding members 10 can be arranged, such as a cord or a strap, for example. The compression chamber 8 may comprise an openable cover 11 enabling the removal of the wood bundle 9 from the compression chamber 8. The compression chamber 8 may comprise one or more lifting arms, by means of which the wood bundle 9 is pushed away, or alternatively the wood bundle 9 can be lifted away from the compression chamber 8 by means of a crane 12 provided on the carrier 2. The crane 12 can also be employed for feeding wood into the feed conveyor 4.

Figure 2 shows the processing device 1 seen from the rear part of the vehicle 2. The processing device 1 is turned transversely around a joint on the carrier 2, and furthermore, the feed conveyor 4 is lowered from the transport position into the operational position. The feed conveyor 4 may comprise edges 13 and its bottom may be provided with a first conveyor 14, which may be a belt conveyor or a chain conveyor, for example. In addition, above the first conveyor 14 may be provided a second conveyor 15 in a manner allowing the material on the feed conveyor 4 to be compressed between the con-veyors 14 and 15, and pre-compressed before being conveyed into the feed chamber 3. The second conveyor 15 may be a rotating roller, for example. The feed conveyor 4 pushes the wood in a feed direction B along a predetermined distance into the feed chamber 3, after which the wood is cut by means of the cutting device 6. The operation of the cutting device 6 may be based on e.g. a guillotine type of guide bar, a circular saw, a chain saw or any chip-removing of shearing cutting member. The feed chamber 3 may comprise sensors for sensing how far the wood has been fed. The sensors may be arranged in connection with a rear wall 16 in the feed chamber 3, whereby the sensors may be arranged to detect when the wood fed hits the rear wall 16. Furthermore, other kinds of sensors may be employed, and the wood can be cut to the desired length. After the cutting, the feed conveyor 4 is stopped or the entry of the wood into the feed chamber is prevented in other manners. The feed opening 5 may be closed by arranging a plate-like cutting blade or the like cutting member in front of the feed opening 5. Once the cutting is performed, the wood in the feed chamber 3 is transferred vertically from the feed chamber 3 into the intermediate chamber 7. The feed chamber 3 comprises a bottom 17 arranged vertically C movable. The bottom 17 can be moved with one or more actuators 18. The actuator 18 may be a pressure medium cylinder, for example. Furthermore, the actuator 18 may be a hydraulic motor arranged to move the bottom 17 in direction C by means of a toothed bar, a link mechanism, an eccentric or the like power transmission members. The vertical surfaces inside the feed chamber 3 may comprise guide members for supporting the bottom 17 during the transfer. The upper surface of the bottom 17, i.e. the surface facing the feed chamber 3, is preferably even, which facilitates the feed of wood into the feed chamber 3. At its simplest, the bottom 17 may be a plate-like structure. The bottom 17 may comprise a plurality of upward-directed supports 60, between which the wood can be arranged and which may support the wood during the transfer. The supports 60 may be arranged in such a manner that when the bottom 17 is lifted up, the supports 60 overlap with the structures in the intermediate chamber 7.

The intermediate chamber 7 may comprise means for receiving the wood, which is lifted into the intermediate chamber 7 by means of the bottom 17. These means may include at least one conveyor 19, which may be composed of one or more parts 19a, 19b. The conveyor 19 is arranged to be able to compress wood between its conveyor members and simultaneously convey the wood vertically towards the compression chamber 8. The compression in the conveyor 19 and the following deformation of the wood contribute to the generation of a tight wood bundle later in the compression chamber 8. If the intention is to temporarily store wood in the intermediate chamber 7, the conveyor 19 can be stopped, whereby the wood remains in position between the conveyor members of the conveyor 19. When a sufficiently large batch of wood is in the intermediate chamber 7 for the creation of a wood bundle 9, and when a check has been made to ensure that the compression chamber 8 is free to receive wood, closing jaws 20 between the compression chamber 8 and the intermediate chamber 7 can be opened, and the wood can be transferred by means of the conveyor 19 in direction D from the intermediate chamber 7 to the compression chamber 8. The wood can then be further compressed into a smaller volume. After the compression, the closing jaws 20 and/or some other compression members in the compression chamber 8 can be employed. The closing jaws 20 may be arranged between the conveyor parts 19a and 19b in a manner allowing the conveyor 19 and the closing jaws 20 to move partly overlapping. This allows the closing jaws 20 to be transferred below the wood bundle being created. Furthermore, the compression chamber 8 may comprise one or more binding devices 21 for wrapping a suitable binding member 10 around the wood bundle 9 in direction E. The binding device 21 may be arranged in the immediate vicinity of each closing jaw 20 or other compression member, allowing the binding member 10 to be arranged as close to the compressed point as possible. Alternatively, the compression chamber 8 may comprise a longitudinal guide surface 61, along which the binding device 21 can be moved to the desired point. In this case, one binding device 21 is sufficient.

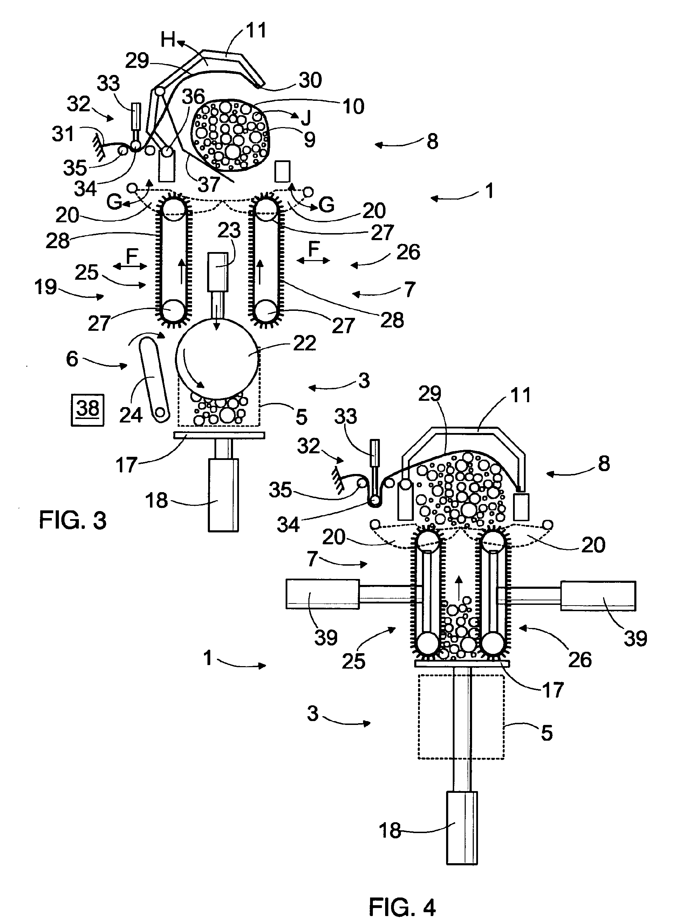

Figure 3 illustrates, in a strongly simplified manner, a processing device 1 according to the invention. The cutting device 6 may comprise a circular saw 22 that can be moved with an actuator 23, such as a hydraulic cylinder, for example. Furthermore, the cutting device 6 may comprise second means for cutting the wood. The solution presented in Figure 3 comprises, not only the circular saw 22, but also a chain saw 24, allowing the cutting to be performed with either cutting means depending on e.g. the thickness and quality of the wood. After the cutting, the wood is transferred by means of the movable bottom 17 into the intermediate chamber 7, and the conveyor 19 therein receives the cut wood. The conveyor 19 may comprise a first belt conveyor 25 and a second belt conveyor 26, which can be moved towards and away from each other in direction F as denoted in Figure 3. The belt conveyors 25, 26 can be moved with a suitable actuator, such as a pressure medium cylinder, for example. On opposite sides of the intermediate chamber, a plurality of first belt conveyors 25 may be arranged, and, correspondingly, a plurality of second belt conveyors 26 in a manner allowing the closing jaws 20 in the upper part of the intermediate chamber 7 to move in direction G from between the first belt conveyors 25 and, correspondingly, from between the second belt conveyors 26. Each belt conveyor 25, 26 comprises at least two rollers 27, around which a conveyor belt 28 is arranged to pass. The conveyor belt 28 may be made from a flexible material, such as plastic or rubber, or it can be a chain, for example. The conveyor belt 28 may also comprise projections for improving its transport capacity. The lower part of the compression chamber 8, its opposite sides, may be provided with closing jaws 20, which are arranged pivoted in a manner allowing them to be arranged against each other in the manner shown in Figure 3. The closing jaws 20 take the wood from the conveyor 19 and prevent the wood from falling back into the intermediate chamber 7. In addition, the closing jaws 20 may compress the wood. In addition, a flexible compressing member 29 can be employed for compressing the wood, and the first end of the member may be connected to a front part 30 in the cover 11 and its second end may be connected to a fastening point 31 in the body of the processing device 1. The flexible compressing member 29 may be e.g. a chain, a wire, a band or a metal band. The flexible compressing member 29 passes at least partly around the wood in the compression chamber 8, allowing the wood to be pressed against the surfaces delimiting the compression chamber 8 by tightening the compressing member 29. The flexible compressing member 29 can be tightened by means of a tightening device 32, which may comprise at least one actuator 33, such as a hydraulic cylinder, for moving a presser roller 34 in a space between control rollers 35 in the manner shown in Figure 4. The flexible compressing member 29 can be tightened swiftly by means of such a tightening device 32.

Figure 3 shows that the cover of the compression chamber 8 can be opened after the wood bundle 9 is formed by turning it in direction H around a joint 36. The wood bundle 9 can then be pushed in direction J away from the compression chamber 8 by means of one or more lifting arms 37.

The above-described operations can be controlled by means of a control unit 38. The control unit 38 may be a computer or another control device suitable for the purpose, such as programmable logics, for example. Furthermore, the control unit 38 may enable automatic use of the processing device 1, the operator of the device mainly attending only to the feed of wood into the feed conveyor 4.

In Figure 4, the bottom plate 17 of the feed chamber 3 is lifted to its upper position by means of the actuator 18. The wood, brought into the intermediate chamber 7 by means of the bottom plate 17, is compressed between the belt conveyors 25 and 26 in such a manner that the wood remains in the conveyor 19 after the bottom plate 17 is again lowered down. The belt conveyors 25 and 26 can be moved towards each other by means of actuators 39.

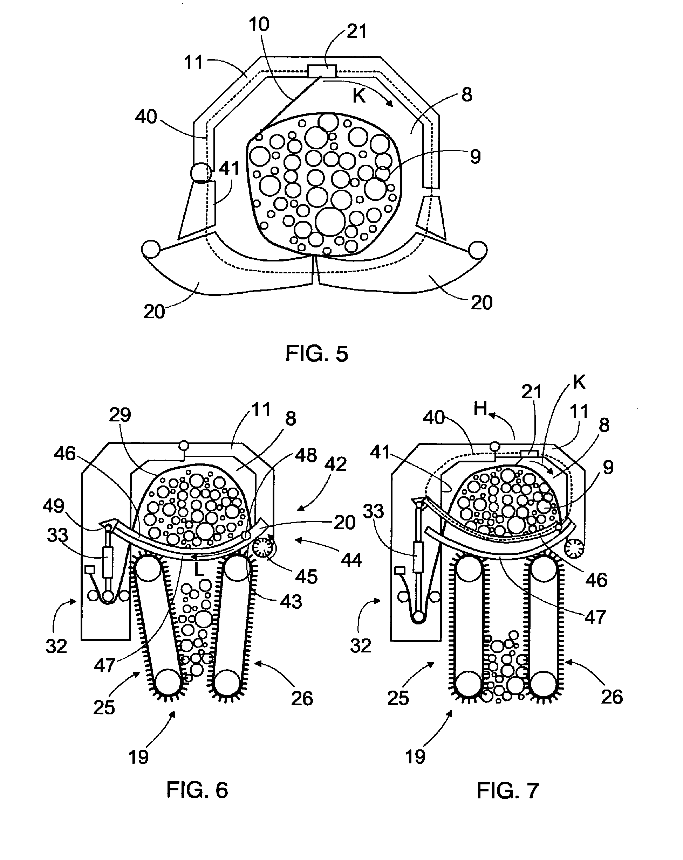

Figure 5 shows a solution for transporting the binding device 21 in direction K around the wood bundle 9 in the compression chamber 8. The surfaces delimiting the interior of the compression chamber 8 are provided with at least one guide surface 40, along which the binding device 21 is arranged to be driven. The guide surface 40 may be formed in the cover 11 of the co m-pression chamber 8, in the closing jaws 20 and further in the inner walls 41 of the compression chamber 8 in such a manner that when the cover 11 and the closing jaws 20 are closed, a substantially integrated mechanical structure is generated round the wood bundle 9. The guide surface 40 may comprise a groove of the desired shape, for example having a cross section in the form of the letter T. The binding device 21 may comprise a cradle having wheels that may be supported on said groove. In addition, the cradle may comprise driving equipment for moving the binding device 21.

Figure 6 shows another solution for the closing jaw of the compression chamber 8. In this construction, one or more closing jaws 20 are driven in direction L from one side of the compression chamber 8 below the wood bundle 9 to the other side of the compression chamber 8. The closing jaw 20 may be driven below the wood bundle from the openable side 42 of the cover 11. In a similar manner as in the above-described structures, the closing jaw 20 can be driven from between the conveyor parts belonging to the conveyor 19. In this case, the wood is always supported by the conveyor 19 and/or the closing jaw 20. The outer surface 43 of the closing jaw 20 may be provided with a toothing, a fixed chain or the like, which can be acted on by means of a transfer device 44 provided in the cover 11. The transfer device 44 may comprise an actuator, such as a hydraulic motor, which may be arranged to act on the closing jaw 20 by means of a gearwheel 45. The closing jaw 20 comprises two parts, i.e. an inner first part 46 and an outer second part 47. The inner part 46 is connected by means of a joint 48 to the outer part 47, allowing the inner part 46 to be turned by means of the actuator 33 relative to the outer part 47. The tip of the inner part 46 of the closing jaw is provided with a fastening slot 49, on which the actuator 33 may act. After the closing jaw 20 is driven below the wood bundle to the other side, the tip of the inner part 46 of the closing jaw is locked, and wood starts to be compressed by means of the inner closing jaw part 46 in the manner shown in Figure 7. At the same time, the actuator 33 may act on the flexible compressing member 29 by means of the tightening device 32, whereby the wood is compressed between the part 46 and the member 29.

Figure 7 further shows an embodiment for creating a guide surface 40 around a compressed wood bundle 9 in the compression chamber 8. When the wood is compressed by means of the inner part 46 of the closing jaw, a space may form between the inner part 46 and the outer part 47 of the closing jaw, enabling the drive of the binding device 21 from between the parts 46 and 47. In this case, the guide surface 40 is formed on the outer surface of the inner part 46 of the closing jaw, whereby it, together with the guide surface 40 formed on the inner surface 41 of the body of the compression chamber 8, and further, together with the guide surface 40 formed on the inner surface of the cover 11, constitutes a substantially integrated mechanical structure around the wood bundle 9. The binding device 21 may be driven, supported by the guide surface 40, around the wood bundle 9 for adjusting the binding member 10.

Figure 6 further shows that the conveyor 19 may be constructed in a manner allowing the conveyor parts 25 and 26 to be turned relative to each other, whereby the distance between the conveyor parts 25 and 26 in the upper part and lower part of the conveyor 19 may be different. For example, when a longer distance is formed in the upper part of the conveyor parts 25 and 26 than in the lower part of the conveyor 19 in the manner shown in Figure 6, a larger space forms in the upper part of the conveyor 19, wherein cut wood can be temporarily stored.

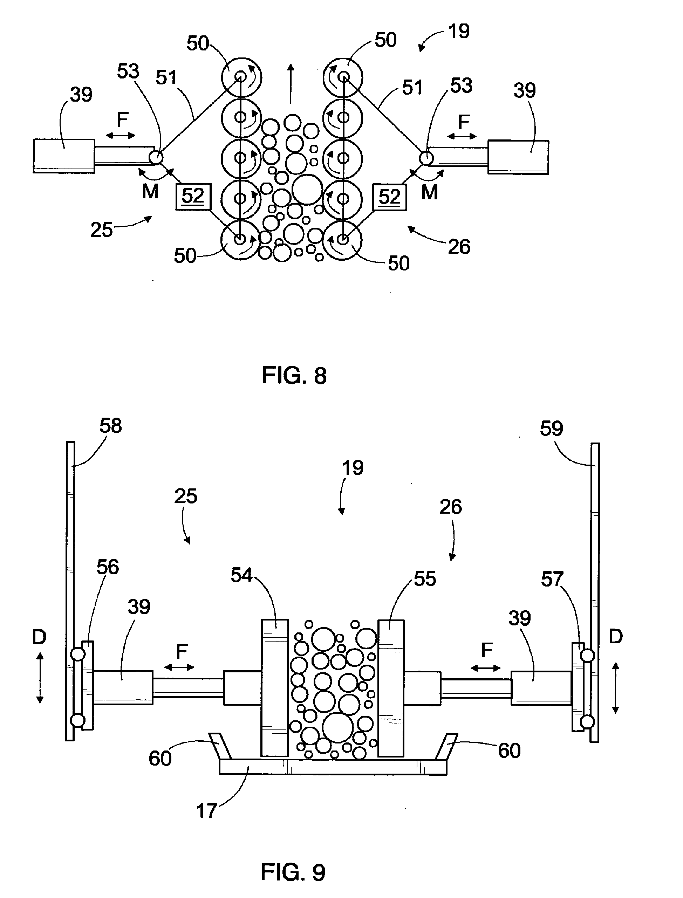

Figure 8 shows a conveyor 19 adaptable to the transfer of wood in the intermediate chamber 7. The conveyor 19 comprises at least one first conveyor part 25 and at least one second conveyor part 26, which are a r-ranged on opposite sides of the intermediate chamber 7. Each conveyor part 25, 26 comprises a plurality of rollers 50 arranged in a roller bearer 51. The rollers 50 can be rotated by means of an actuator 52, e.g. a hydraulic motor, to make the wood move towards the compression chamber 8. The roller bearers 51 may be coupled to a joint 53, allowing the conveyor parts 25, 26 to be turned in direction M.

Figure 9 shows still another conveyor 19 adaptable to the intermediate chamber 7. The conveyor parts 25, 26 comprise mating surfaces 54, 55, which are movable in direction F by means of the actuator 39. The wood can be taken from the top of the raised bottom 17 of the feed chamber and compressed between the mating surfaces 54, 55. The wood can then be transferred in direction D by moving cradles 56 and 57, in which the actuator 39 and the mating surfaces 54, 55 are arranged. The cradles 56, 57 can be supported onto guide surfaces 58 and 59. The conveyor 19 shown in Figure 9 is able to transfer one wood batch at a time.

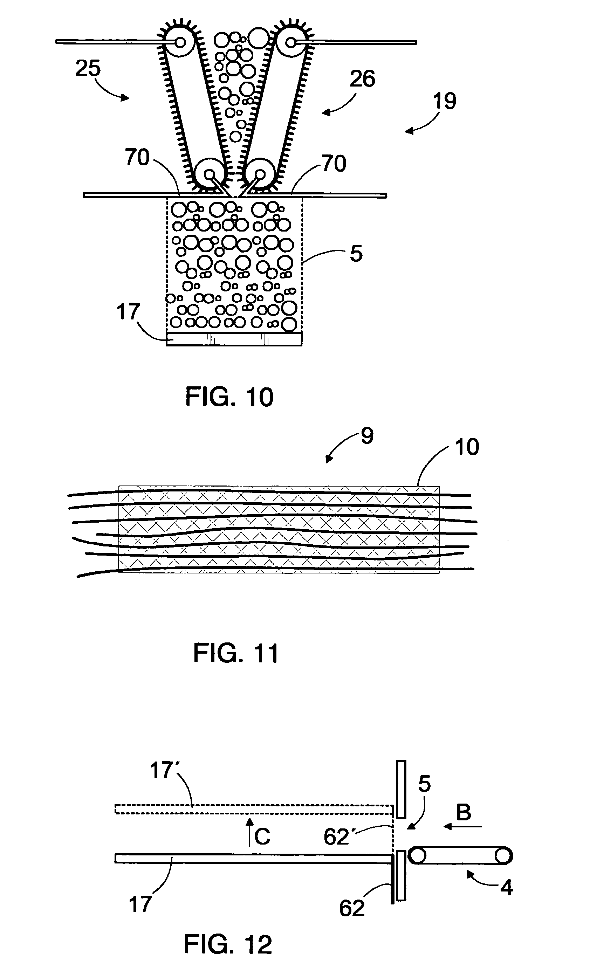

Figure 10 shows a conveyor 19 by means of which the upper part of the feed chamber 3 can be closed. The conveyor parts 25 and 26 are movable from the lower part towards each other. In addition, lower bodies 70 of the conveyor parts 25, 26 can form a substantially even surface on the side of the feed chamber 3. This facilitates the feed of wood into the feed chamber 3. The lower body 70 may be made by bending from plate material, for example.

Figure 11 shows a wood bundle 9, which is compressed in the compression chamber 8 of the processing device 1 and around which a netlike binding member 10 is arranged. The net fastens well to the wood and accordingly remains well in position. The net does not necessarily have to be strapped at all, but it can only be wrapped around the wood bundle. Furthermore, since the net remains well in position, the number of net rounds wrapped around the wood bundle can be quite small, even as few as 2 to 4 rounds. In addition, the net can be dimensioned to longitudinally cover the entire wood bundle at a time or an appropriate part of the bundle. Accordingly, the net is swift to install.

Figure 12 shows an embodiment of the bottom 17 of the feed chamber 3. The bottom 17 may be provided with a closing member 62 for closing the feed opening 5. The closing member 62 may be configured to close the feed opening 5 when wood is being transferred away from the feed chamber 3 by means of the bottom 17 of the feed chamber. Figure 12 shows, by broken lines, a situation where the bottom 17' is in the upper position and the closing member 62' has closed the feed opening 5. Consequently, the closing member 62 can be used to prevent wood from entering the feed chamber 3 when the feed chamber 3 is not ready to receive it. Furthermore, the feed conveyor 4 does not necessarily have to be stopped during the transfer of the bottom 17. The closing member 62 can be an integrated plate-like structure or it may comprise a plurality of plate-like pieces coupled together by means of joints. In the latter case, the closing member 62 can be arranged to turn along suitable guide surfaces, allowing the closing member 62 to be arranged to save space, for example by making it shift from a horizontal position to a vertical position at the same time as the bottom 17 shifts from down up. Furthermore, the closing member 62 may be made from a chain or the like.

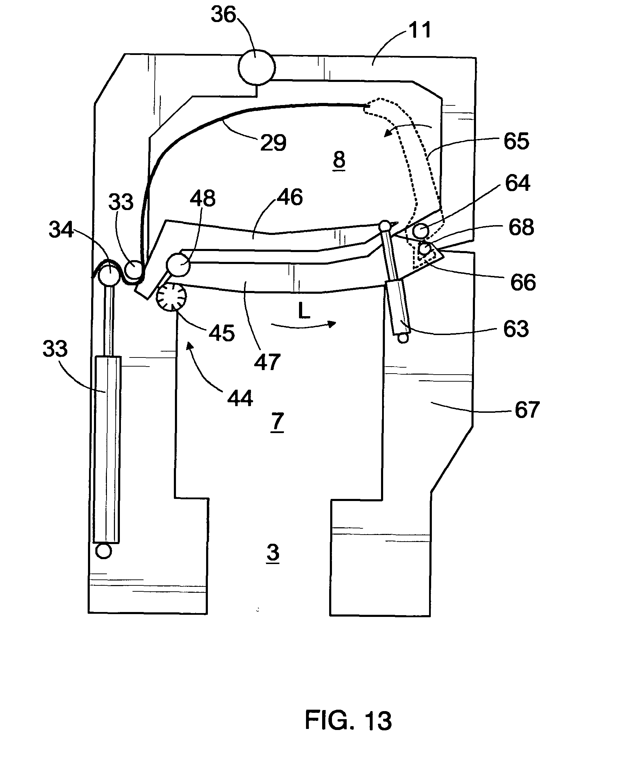

Figure 13 shows still another embodiment of the compression chamber 8. For the sake of clarity, the constructions of the intermediate chamber 7 and the feed chamber 3 are shown in a strongly simplified manner. The solution shown in Figure 13 differs from the solutions according to Figures 6 and 7 at least in that now the two-part closing jaw 20 is configured to be driven below the wood bundle from the fixed side of the compression chamber 8 to the side of the openable cover 11. The transfer of the closing jaw 20 can be accomplished by means of the transfer device 44. The inner part 46 of the closing jaw may be rotationally coupled by means of a joint 48 to the lower part 47 of the closing jaw, allowing the inner part 46 to be rotated towards the compression chamber 8 by means of an actuator 63. Furthermore, a lever 65 may be coupled to the cover 11 by means of a joint 64, the flexible compressing member 29 being coupled to the free end of the lever. When the actuator 33 tightens the flexible compressing member 29, the lever 65 turns and makes the wood compress together with the flexible compressing member 29. The lower part of the lever 65 may be provided with a locking claw 66 that locks the cover 11 to a locking tap 68 or the like in the body 67 of the processing device 1 at the same time as the wood bundle starts to be compressed, and the lever 64 turns towards the compression chamber 8.

Let it be mentioned that, when need be, the constructions presented in the present application can be employed in other assemblies than the ones shown in the figures. Accordingly, for instance the wood-tightening device, the conveyer enabling temporary storage of the wood, the two-part closing jaw structures and, further, the guide surfaces of the binding device can be applied in many different constructions and in a plurality of ways.

The drawings and the related description are only intended to illustrate the idea of the invention. The details of the invention may vary within the scope of the claims.

## Claims

1. A method of processing wood in a processing device,
the method comprising:
feeding wood with a feed conveyor (4) through a feed opening (5) in the processing device (1) into a feed chamber (3);
cutting the wood by means of at least one cutting device (6) provided between the feed conveyor (4) and the feed chamber (3) after feeding a wood batch of a predetermined size into the feed chamber (3);
transferring the wood in the feed chamber (3) away from the feed opening (5) after the cutting; and
compressing the cut wood to reduce its volume and to create a wood bundle,
**characterized by** moving a bottom (17) of the feed chamber vertically and discharging the wood from the feed chamber (3) by means of the bottom (17).

2. A method as claimed in claim 1, **characterized by**
transferring the wood vertically from the feed chamber (3) to an intermediate chamber (7) by moving the bottom (17) of the feed chamber,
receiving the wood with at least one conveyor (19) in the intermediate chamber (7),
temporarily storing the wood in the intermediate chamber (7),
transferring the wood with the conveyor (19) vertically from the intermediate chamber (7) to a compression chamber (8), and
compressing the wood in the compression chamber (8) to reduce its volume.

3. A method as claimed in claim 1 or 2, **characterized by**
arranging at least one substantially integrated mechanical structure having at least one guide surface (40) around the wood in the compression chamber (8),
moving at least one binding device (21) along said guide surface (40) around the wood in the compression chamber (8), and
arranging at least one binding member (10) around the wood by means of the binding device (21).

4. A method as claimed in any one of the preceding claims, **characterized by** compressing the wood in the compression chamber (8) by means of at least one flexible compressing member (29).

5. A device for processing wood, the device (1) comprising:
a feed chamber (3) provided with a feed opening (5);
at least one feed conveyor (4) configured to feed the wood to be processed through the feed opening (5) into the feed chamber (3);
at least one cutting device (6) arranged between the feed conveyor (4) and the feed chamber (3), the cutting device (6) being configured to cut the wood after the wood is fed into the feed chamber (3);
an intermediate chamber (7) disposed in the immediate vicinity of the feed chamber (3);
transfer means for transferring the cut wood from the feed chamber (3) into the intermediate chamber (7);
means for transferring the wood further from the intermediate chamber (7) into a compression chamber (8); and
compression means for reducing the volume of the wood in the compression chamber (8) and for creating a wood bundle,
**characterized in**
**that** the feed chamber (3) comprises a bottom (17),
**that** at least one actuator (18) is arranged to move the bottom (17) of the feed chamber vertically (C), and
**that** the wood is arranged to be moved from the feed chamber (3) into the intermediate chamber (7) by moving said bottom (17).

6. A device as claimed in claim 5, **characterized in that** the bottom (17) of the feed chamber comprises a surface that is substantially even towards the interior of the feed chamber (8).

7. A device as claimed in claim 6, **characterized in that** the bottom (17) of the feed chamber is a plate-like structure.

8. A device as claimed in any one of claims 5 to 7, **characterized in**
**that** the intermediate chamber (7) comprises at least one conveyor (19) arranged to receive the wood transferred into the intermediate chamber (7) with the bottom (17),
**that** the conveyor (19) comprises at least one first part (25) and at least one second part (26) arranged on opposite sides of the intermediate chamber (7),
**that** the conveyor (19) comprises at least one actuator (39) for moving said first part (25) and second part (26) towards each other and for compressing the wood between the first part (25) and the second part (26), and
**that** the conveyor (19) is arranged to transfer the wood between the first part (25) and the second part (26) vertically towards the compression chamber (8) disposed above the intermediate chamber (7).

9. A device as claimed in any one of claims 5 to 8, **characterized in**
**that** the compression chamber (8) comprises at least one flexible compressing member (29) arranged at least partly around the wood in the compression chamber (8),
**that** at least one tightening device (32) is arranged to act on the compressing member (29), and
**that** the compressing member (29) is arranged to compress the wood in the compression chamber (8) against the surfaces delimiting the interior of the compression chamber (8).

10. A device as claimed in any one of claims 5 to 8, **characterized in**
**that** the compression chamber (8) comprises a body and an openable and closable cover (11),
**that** at least one openable and closable closing jaw (20) is provided between the intermediate chamber (7) and the compression chamber (8),
**that** the body, the closing jaw (20) and the cover (11) constitute, when closed, a substantially integrated mechanical structure around the interior of the compression chamber (8),
**that** at least one guide surface (40) is arranged around the compression chamber (8),
**that** the compression chamber (8) comprises at least one binding device (21) that is movable along said guide surface (40), and
**that** the binding device (21) is arranged to wrap the binding member (10) around the wood in the compression chamber (8).

## Patentansprüche

1. Verfahren zur Bearbeitung von Holz in einer Bearbeitungsvorrichtung,
wobei das Verfahren umfasst:
Zuführen von Holz mit einer Zuführfördereinrichtung (4) durch eine Zuführöffnung (5) in der Bearbeitungsvorrichtung (1) in eine Zuführkammer (3);
Schneiden des Holzes mit Hilfe von mindestens einer Schneidvorrichtung (6), die zwischen der Zuführfördereinrichtung (4) und der Zuführkammer (3) bereitgestellt wird, nach Zuführen einer Holzmenge einer vorbestimmten Größe in die Zuführkammer (3);
Transferieren des Holzes in die Zuführkammer (3) weg von der Zuführöffnung (5) nach dem Schneiden und
Komprimieren des geschnittenen Holzes, um sein Volumen zu verringern und ein Holzbündel zu erzeugen,
**gekennzeichnet durch** Bewegen eines Bodens (17) der Zuführkammer vertikal und Entladen des Holzes von der Zuführkammer (3) mit Hilfe des Bodens (17).

2. Verfahren gemäß Anspruch 1, **gekennzeichnet durch**
Transferieren des Holzes vertikal von der Zuführkammer (3) zu einer Zwischenkammer (7) **durch** Bewegen des Bodens (17) der Zuführkammer,
Aufnehmen des Holzes mit mindestens einer Fördereinrichtung (19) in der Zwischenkammer (7),
vorübergehendes Lagern des Holzes in der Zwischenkammer (7),
Transferieren des Holzes mit der Fördereinrichtung (19) vertikal von der Zwischenkammer (7) in eine Kompressionskammer (8) und
Komprimieren des Holzes in der Kompressionskammer (8), um sein Volumen zu verringern.

3. Verfahren gemäß Anspruch 1 oder 2, **gekennzeichnet durch**
Anordnen mindestens einer im Wesentlichen integrierten mechanischen Struktur mit mindestens einer Führungsoberfläche (40) um das Holz in der Kompressionskammer (8),
Bewegen mindestens einer Bindevorrichtung (21) entlang der Führungsoberfläche (40) um das Holz in der Kompressionskammer (8) und
Anordnen mindestens eines Bindeelements (10) um das Holz mit Hilfe der Bindevorrichtung (21).

4. Verfahren gemäß einem der vorhergehenden Ansprüche,
**gekennzeichnet durch** Komprimieren des Holzes in der Kompressionskammer (8) mit Hilfe von mindestens einem biegsamen Kompressionselement (29).

5. Vorrichtung zur Bearbeitung von Holz, wobei die Vorrichtung (1) umfasst:
eine Zuführkammer (3), die mit einer Zuführöffnung (5) ausgestattet ist;
mindestens eine Zuführfördereinrichtung (4), die konfiguriert ist, um das zu bearbeitende Holz durch die Zuführöffnung (5) in die Zuführkammer (3) zuzuführen;
mindestens eine Schneidvorrichtung (6), die zwischen der Zuführfördereinrichtung (4) und der Zuführkammer (3) angeordnet ist, wobei die Schneidvorrichtung (6) konfiguriert wird, um das Holz zu schneiden, nachdem das Holz in die Zuführkammer (3) zugeführt ist;
eine Zwischenkammer (7), die in der direkten Nähe der Zuführkammer (3) angeordnet ist;
ein Transfermittel zum Transferieren des geschnittenen Holzes von der Zuführkammer (3) in die Zwischenkammer (7);
ein Mittel zum Transferieren des Holzes weiter von der Zwischenkammer (7) in eine Kompressionskammer (8); und
ein Kompressionsmittel zum Verringern des Volumens des Holzes in der Kompressionskammer (8) und zum Erzeugen eines Holzbündels,
**dadurch gekennzeichnet,**
**dass** die Zuführkammer (3) einen Boden (17) umfasst,
**dass** mindestens ein Aktuator (18) angeordnet ist, um den Boden (17) der Zuführkammer vertikal (C) zu bewegen, und
**dass** das Holz angeordnet ist, um von der Zuführkammer (3) in die Zwischenkammer (7) durch Bewegen des Bodens (17) bewegt zu werden.

6. Vorrichtung gemäß Anspruch 5, **dadurch gekennzeichnet, dass** der Boden (17) der Zuführkammer eine Oberfläche umfasst, die im Wesentlichen eben zu dem Inneren der Zuführkammer (8) hin ist.

7. Vorrichtung gemäß Anspruch 6, **dadurch gekennzeichnet, dass** der Boden (17) der Zuführkammer eine plattenähnliche Struktur ist.

8. Vorrichtung gemäß Anspruch einem der Ansprüche 5 bis 7, **dadurch gekennzeichnet,**
**dass** die Zwischenkammer (7) mindestens eine Fördereinrichtung (19) umfasst, die angeordnet ist, um das in die Zwischenkammer (7) transferierte Holz mit dem Boden (17) aufzunehmen,
**dass** die Fördereinrichtung (19) mindestens einen ersten Teil (25) und mindestens einen zweiten Teil (26) umfasst, die auf gegenüberliegenden Seiten der Zwischenkammer (7) angeordnet sind,
**dass** die Fördereinrichtung (19) mindestens einen Aktuator (39) zum Bewegen des ersten Teils (25) und des zweiten Teils (26) zueinander hin und zum Komprimieren des Holzes zwischen dem ersten Teil (25) und dem zweiten Teil (26) umfasst, und
**dass** die Fördereinrichtung (19) angeordnet ist, um das Holz zwischen dem ersten Teil (25) und dem zweiten Teil (26) vertikal zu der Kompressionskammer (8) hin zu bewegen, die über der Zwischenkammer (7) angeordnet ist.

9. Vorrichtung gemäß einem der Ansprüche 5 bis 8, **dadurch gekennzeichnet,**
**dass** die Kompressionskammer (8) mindestens ein biegsames Kompressionselement (29) umfasst, das mindestens teilweise um das Holz in der Kompressionskammer (8) angeordnet ist,
**dass** mindestens eine Spannvorrichtung (32) angeordnet ist, um auf das Kompressionselement (29) zu wirken, und
**dass** das Kompressionselement (29) angeordnet ist, um das Holz in der Kompressionskammer (8) gegen die Oberflächen zu komprimieren, die das Innere der Kompressionskammer (8) begrenzen.

10. Vorrichtung gemäß Anspruch einem der Ansprüche 5 bis 8, **dadurch gekennzeichnet,**
**dass** die Kompressionskammer (8) einen Körper und eine öffenbare und schließbare Abdeckung (11) umfasst,
**dass** mindestens eine öffenbare und schließbare Verschlussbacke (20) zwischen der Zwischenkammer (7) und der Kompressionskammer (8) bereitgestellt wird,
**dass** der Körper, die Verschlussbacke (20) und die Abdeckung (11), wenn geschlossen, eine im Wesentlichen integrierte mechanische Struktur um das Innere der Kompressionskammer (8) bilden,
**dass** mindestens eine Führungsoberfläche (40) um die Kompressionskammer (8) angeordnet ist,
**dass** die Kompressionskammer (8) mindestens eine Bindevorrichtung (21) umfasst, die entlang der Führungsoberfläche (40) bewegbar ist, und
**dass** die Bindevorrichtung (21) angeordnet ist, um das Bindeelement (10) um das Holz in der Kompressionskammer (8) zu wickeln.

## Revendications

1. Procédé pour traiter du bois dans un dispositif de traitement, le procédé comprenant les étapes consistant à :
alimenter du bois avec un convoyeur d'alimentation (4) en passant par une ouverture d'alimentation (5) dans le dispositif de traitement (1) dans une chambre d'alimentation (3) ;
couper le bois au moyen d'au moins un dispositif de coupe (6) prévu entre le convoyeur d'alimentation (4) et la chambre d'alimentation (3) après avoir alimenté un lot de bois d'une taille prédéterminée dans la chambre d'alimentation (3) ;
transférer le bois dans la chambre d'alimentation (3) à distance de l'ouverture d'alimentation (5) après la coupe ; et
comprimer le bois coupé pour réduire son volume et pour créer un paquet de bois,
**caractérisé par** l'étape consistant à déplacer un fond (17) de la chambre d'alimentation verticalement et à décharger le bois de la chambre d'alimentation (3) au moyen du fond (17).

2. Procédé selon la revendication 1, **caractérisé par** les étapes consistant à :
transférer le bois verticalement de la chambre d'alimentation (3) à une chambre intermédiaire (7) en déplaçant le fond (17) de la chambre d'alimentation,
recevoir le bois avec au moins un convoyeur (19) dans la chambre intermédiaire (7) ;
stocker temporairement le bois dans la chambre intermédiaire (7),
transférer le bois avec le convoyeur (19) verticalement de la chambre intermédiaire (7) à une chambre de compression (8), et
compresser le bois dans la chambre de compression (8) pour réduire son volume.

3. Procédé selon la revendication 1 ou 2, **caractérisé par** les étapes consistant à :
agencer au moins une structure mécanique sensiblement intégrée ayant au moins une surface de guidage (40) autour du bois dans la chambre de compression (8),
déplacer au moins un dispositif de liaison (21) le long de ladite surface de guidage (40) autour du bois dans la chambre de compression (8), et
agencer au moins un élément de liaison (10) autour du bois au moyen du dispositif de liaison (21).

4. Procédé selon l'une quelconque des revendications précédentes, **caractérisé par** l'étape consistant à comprimer le bois dans la chambre de compression (8) au moyen d'au moins un élément de compression flexible (29).

5. Dispositif pour traiter le bois, le dispositif (1) comprenant :
une chambre d'alimentation (3) dotée d'une ouverture d'alimentation (5) ;
au moins un convoyeur d'alimentation (4) configuré pour alimenter le bois à traiter par l'ouverture d'alimentation (5) dans la chambre d'alimentation (3) ;
au moins un dispositif de coupe (6) agencé entre le convoyeur d'alimentation (4) et la chambre d'alimentation (3), le dispositif de coupe (6) étant configuré pour couper le bois après que le bois a été alimenté dans la chambre d'alimentation (3) ;
une chambre intermédiaire (7) disposée à proximité immédiate de la chambre d'alimentation (3) ;
des moyens de transfert pour transférer le bois coupé de la chambre d'alimentation (3) dans la chambre intermédiaire (7) ;
des moyens pour transférer le bois supplémentaire de la chambre intermédiaire (7) dans une chambre de compression (8) ; et
des moyens de compression pour réduire le volume du bois dans la chambre de compression (8) et pour créer un paquet de bois,
**caractérisé en ce que** :
la chambre d'alimentation (3) comprend un fond (17),
**en ce qu'**au moins un actionneur (18) est agencé pour déplacer le fond (17) de la chambre d'alimentation verticalement (C), et
**en ce que** le bois est agencé pour être déplacé de la chambre d'alimentation (3) dans la chambre intermédiaire (7) en déplaçant ledit fond (17).

6. Dispositif selon la revendication 5, **caractérisé en ce que** le fond (17) de la chambre d'alimentation comprend une surface qui est sensiblement régulière vers l'intérieur de la chambre d'alimentation (8).

7. Dispositif selon la revendication 6, **caractérisé en ce que** le fond (17) de la chambre d'alimentation est une structure en forme de plaque.

8. Dispositif selon l'une quelconque des revendications 5 à 7, **caractérisé en ce que** :
la chambre intermédiaire (7) comprend au moins un convoyeur (19) agencé pour recevoir le bois transféré dans la chambre intermédiaire (7) avec le fond (17),
**en ce que** le convoyeur (19) comprend au moins une première partie (25) et au moins une seconde partie (26) agencées sur les côtés opposés de la chambre intermédiaire (7),
**en ce que** le convoyeur (19) comprend au moins un actionneur (39) pour déplacer ladite première partie (25) et la seconde partie (26) l'une vers l'autre et pour compresser le bois entre la première partie (25) et la seconde partie (26), et
**en ce que** le convoyeur (19) est agencé pour transférer le bois entre la première partie (25) et la seconde partie (26) verticalement vers la chambre de compression (8) disposée au-dessus de la chambre intermédiaire (7).

9. Dispositif selon l'une quelconque des revendications 5 à 8, **caractérisé en ce que** :
la chambre de compression (8) comprend au moins une chambre de compression flexible (29) agencée au moins partiellement autour du bois dans la chambre de compression (8),
**en ce qu'**au moins un dispositif de serrage (32) est agencé afin d'agir sur l'élément de compression (29), et
**en ce que** l'élément de compression (29) est agencé pour comprimer le bois dans la chambre de compression (8) contre les surfaces délimitant l'intérieur de la chambre de compression (8).

10. Dispositif selon l'une quelconque des revendications 5 à 8, **caractérisé en ce que** :
la chambre de compression (8) comprend un corps et un couvercle pouvant s'ouvrir et se fermer (11),
**en ce qu'**au moins une mâchoire de fermeture pouvant s'ouvrir et se fermer (20) est prévue entre la chambre intermédiaire (7) et la chambre de compression (8),
**en ce que** le corps, la mâchoire de fermeture (20) et le couvercle (11) constituent, lorsqu'ils sont fermés, une structure mécanique sensiblement intégrée autour de l'intérieur de la chambre de compression (8),
**en ce qu'**au moins une surface de guidage (40) est agencée autour de la chambre de compression (8),
**en ce que** la chambre de compression (8) comprend au moins un dispositif de liaison (21) qui est mobile le long de ladite surface de guidage (40), et
**en ce que** le dispositif de liaison (21) est agencé pour enrouler l'élément de liaison (10) autour du bois dans la chambre de compression (8).
